# EUROPEAN PATENT APPLICATION

(11) **EP 4 512 685 A1**
(43) Date of publication of application: **26.02.2025**
(21) Application number: 22784978.3
(22) Date of filing: 06.04.2022
(51) Int. Cl.: B60W 60/00, B60W 30/08, G05D 1/00

(54) **VEHICLE FOR PERFORMING MINIMAL RISK MANEUVER, AND VEHICLE OPERATION METHOD**

(30) Priority: 08.04.2021 KR 20210045583
(71) Applicant: Hyundai Motor Company, Seoul 06797 (KR); Kia Corporation, Seoul 06797 (KR)
(72) Inventor: MIN, Young Bin, Gwangmyeong-si Gyeonggi-do 14305 (KR); PARK, Jong Sung, Hwaseong-si Gyeonggi-do 18237 (KR); JANG, Chan Jong, Hwaseong-si Gyeonggi-do 18270 (KR); YOON, Chul Hwan, Seoul 05266 (KR)
(74) Representative: Hoffmann Eitle
(86) International application number: PCT/KR2022/004996
(87) International publication number: WO 2022/216069

(57) **Abstract**

Various embodiments of the present disclosure relate to a vehicle configured to execute a minimal risk maneuver, and a method for operating the vehicle. Disclosed is an autonomous driving vehicle, including: at least one sensor configured to sense a surrounding environment of the vehicle to generate surrounding environment information; a processor configured to monitor a state of the vehicle to generate vehicle state information and to control autonomous driving of the vehicle; and a controller configured to control operation of the vehicle according to the control of the processor, and the processor may be configured to sense whether a minimal risk maneuver is needed based on at least one among the surrounding environment information and the vehicle state information during the autonomous driving of the vehicle; to determine a type of the minimal risk maneuver based on the vehicle state information when the minimal risk maneuver is needed; and to control the vehicle to stop based on the determined type of the minimal risk maneuver, and the type of the minimal risk maneuver may include at least one among an immediate deceleration type and a limited autonomous driving type.

## Description

### CROSS REFERENCE TO RELATED APPLICATION

The present application claims priority to Korea Patent Application No. 10-2021-0045583, filed on April 8, 2021, the entire contents of which are incorporated herein for all purposes by this reference.

### [Technical Field]

The present disclosure relates to a vehicle configured to execute a minimal risk maneuver, and a method for operating the vehicle.

### [Background Art]

Recently, advanced driver assistance systems (ADAS) have been developed to assist drivers in driving. The ADAS has multiple sub-classifications and provides convenience to the driver. Such ADAS is also called autonomous driving or ADS (Automated Driving System).

Meanwhile, an abnormality may occur in the autonomous driving system while the vehicle performs the autonomous driving. The vehicle may get into a dangerous state if appropriate measures are not taken against such abnormality in the autonomous driving system.

### [DISCLOSURE]

### [Technical Problem]

Accordingly, various embodiments of the present disclosure disclose a vehicle that performs a minimal risk maneuver (MRM) to remove (or reduce) a risk and a method for operating the vehicle when a situation in which normal autonomous driving is impossible is detected during autonomous driving.

Various embodiments of the present disclosure disclose a device which immediately decelerates or performs the limited autonomous driving based on whether a serious problem related to the autonomous driving occurs during the autonomous driving of the vehicle, and a method for operating the device.

Technical objects to be achieved by the present disclosure are not limited to the aforementioned objects, and those skilled in the art to which the present disclosure pertains may evidently understand other technical objects from the following description.

### [Technical Solution]

One embodiment is an autonomous driving vehicle, including: at least one sensor configured to sense surrounding environment of the vehicle to generate surrounding environment information, a processor configured to monitor state of the vehicle to generate vehicle state information and to control autonomous driving of the vehicle; and a controller configured to control operation of the vehicle according to the control of the processor. The processor may be configured to sense whether a minimal risk maneuver is needed based on at least one among the surrounding environment information and the vehicle state information during the autonomous driving of the vehicle; to determine a type of the minimal risk maneuver based on the vehicle state information when the minimal risk maneuver is needed and to control the vehicle to stop based on the determined type of the minimal risk maneuver, and the type of the minimal risk maneuver may include at least one among an immediate deceleration type and a limited autonomous driving type.

According to an embodiment, the vehicle state information may represent whether functions needed for autonomous driving are possible to operate normally, and the functions needed for autonomous driving may include at least one among a lane detection function, a lane change function, a lateral control function, a deceleration function, a powertrain control function, a safe area detection function, and an obstacle recognition and distance detection function.

According to an embodiment, the processor may be configured to determine whether at least one function among the functions needed for the autonomous driving is impossible to operate normally based on the vehicle state information, and determine the immediate deceleration type to be the type of the minimum risk maneuver when at least one function among the functions needed for the autonomous driving is impossible to operate normally.

According to an embodiment, the immediate deceleration type may include at least one among an emergency stop type of stopping the vehicle at a specified first deceleration, a gradual stop type of selecting one among a second deceleration and a third deceleration based on at least one among presence of an obstacle and a distance to the obstacle and stopping the vehicle at the selected deceleration and a gradual stop within lane type of selecting at least one among a second deceleration and a third deceleration based on at least one among presence of an obstacle and a distance to the obstacle and maintaining to be in a lane while stopping the vehicle at the selected deceleration. Further the second deceleration may be smaller than the first deceleration and the third deceleration may be greater than the second deceleration and smaller than or equal to the first deceleration.

According to an embodiment, the processor may be configured to determine the emergency stop type to be the type of the minimal risk maneuver when the lane detection function, the lateral control function, the lane change function, the obstacle recognition and distance detection function are impossible to operate normally and the deceleration function operates normally among the functions needed for the autonomous driving and control the vehicle to be stopped at the first deceleration according to the emergency stop type.

According to an embodiment, the processor may be configured to determine the gradual stop type to be the type of the minimal risk maneuver when the lane detection function, the lateral control function, the lane change function are impossible to operate normally and the deceleration function and the obstacle recognition and distance detection function operate normally among the functions needed for the autonomous driving, detect the presence of an obstacle or the distance to the obstacle according to the gradual stop type, control the vehicle to be stopped at the second deceleration when there is no obstacle in a forward direction of the vehicle as a result of the detection, control the vehicle to be stopped at the second deceleration when there is an obstacle in a forward direction of the vehicle as a result of the detection, and the distance to the obstacle is greater than a specified threshold distance and control the vehicle to be stopped at the third deceleration when there is an obstacle in a forward direction of the vehicle as a result of the detection, and the distance to the obstacle is smaller than or equal to a specified threshold distance.

According to an embodiment, the processor may be configured to determine the gradual stop within lane type to be the type of the minimal risk maneuver when the lane change function is impossible to operate normally and the deceleration function, the obstacle recognition and distance detection function, the lane detection function, and the lateral control function operate normally among the functions needed for the autonomous driving and detect the presence of an obstacle or the distance to the obstacle according to the gradual stop within lane type, control the vehicle to be stopped at the second deceleration while maintaining to be in a lane in which the vehicle travels when there is no obstacle in a forward direction of the vehicle as a result of the detection, control the vehicle to be stopped at the second deceleration while maintaining to be in a lane in which the vehicle travels when there is an obstacle in a forward direction of the vehicle as a result of the detection, and the distance to the obstacle is greater than a specified threshold distance, and control the vehicle to be stopped at the third deceleration while maintaining to be in a lane in which the vehicle travels when there is an obstacle in a forward direction of the vehicle as a result of the detection, and the distance to the obstacle is smaller than or equal to a specified threshold distance.

According to an embodiment, the processor may be configured to determine the limited autonomous driving type to be the type of the minimal risk maneuver when all the functions needed for the autonomous driving are possible to operate normally and the minimum risk maneuver is needed.

According to an embodiment, the processor may be configured to limit at least one among a maximum speed of the vehicle and a maximum output power of the vehicle during the limited autonomous driving.

According to an embodiment, the processor may be configured to limit a range of lane change and allow lane change only in a direction away from a center line during the limited autonomous driving.

According to an embodiment, the processor may be configured to search a safe area, set the safe area as a destination, and move into the set destination through the limited autonomous driving when the limited autonomous driving type is determined. Further the limited autonomous driving may have a limited condition on at least one among a maximum speed, a maximum output power, lane change, a traveling allowable time, and a traveling allowable distance.

According to an embodiment, the at least one sensor may include at least one camera generating the surrounding environment information, and the processor may search the safe area based on information obtained from the at least one camera.

According to an embodiment, the processor may be configured to compare an image obtained from the at least one camera and a prestored image of a safe area and determine the safe area.

Another embodiment is a method for operating an autonomous driving vehicle, including: obtaining surrounding environment information by sensing a surrounding environment of the vehicle during autonomous driving of the vehicle, obtaining vehicle state information by monitoring a state of the vehicle during the autonomous driving of the vehicle; sensing whether a minimal risk maneuver is needed based on at least one among the surrounding environment information and the vehicle state information during the autonomous driving of the vehicle, determining a type of the minimal risk maneuver based on the vehicle state information when the minimal risk maneuver is needed and stopping the vehicle based on the determined type of the minimal risk maneuver, and the type of the minimal risk maneuver may include at least one among an immediate deceleration type and a limited autonomous driving type.

According to an embodiment, the vehicle state information may represent whether functions needed for the autonomous driving are possible to operate normally, and the functions needed for autonomous driving include at least one among a lane detection function, a lane change function, a lateral control function, a deceleration function, a powertrain control function, a safe area detection function, and an obstacle recognition and distance detection function.

According to an embodiment, the determining a type of the minimal risk maneuver based on the vehicle state information may include: determining whether at least one function among the functions needed for the autonomous driving is impossible to operate normally based on the vehicle state information; and determining the immediate deceleration type to be the type of the minimum risk maneuver when at least one function among the functions needed for the autonomous driving is impossible to operate normally.

According to an embodiment, the immediate deceleration type may include at least one among an emergency stop type of stopping the vehicle at a specified first deceleration; a gradual stop type of selecting one among a second deceleration and a third deceleration based on at least one among presence of an obstacle and a distance to the obstacle and stopping the vehicle at the selected deceleration; and a gradual stop within lane type of selecting at least one among a second deceleration and a third deceleration based on at least one among presence of an obstacle and a distance to the obstacle and maintaining to be in a lane while stopping the vehicle at the selected deceleration, and the second deceleration may be smaller than the first deceleration, and the third deceleration may be greater than the second deceleration and smaller than or equal to the first deceleration.

According to an embodiment, the method for operating an autonomous driving vehicle may further include: determining the limited autonomous driving type to be the type of the minimal risk maneuver when all the functions needed for the autonomous driving are possible to operate normally and the minimum risk maneuver is needed.

According to an embodiment, the stopping the vehicle based on the determined type of the minimal risk maneuver may include limiting at least one among a maximum speed of the vehicle, a maximum output power of the vehicle, a direction of lane change, a traveling allowable time, and a traveling allowable distance during the limited autonomous driving when the limited autonomous driving type is determined to be the type of the minimal risk maneuver.

According to an embodiment, the stopping the vehicle based on the determined type of the minimal risk maneuver may further include: searching a safe area and setting the safe area as a destination; and moving into the set destination through the limited autonomous driving.

### [Advantageous Effect]

According to various embodiments of the present disclosure, it is possible to improve safety by minimizing a risk of a vehicle through execution of the minimal risk maneuver, when a situation in which normal autonomous driving is impossible is detected during the autonomous driving of the vehicle.

### [Description of Drawings]

FIG. 1 is a block diagram of a vehicle according to various embodiments of the present disclosure.
FIG. 2 is a view illustrating minimal risk maneuver (MRM) types according to a vehicle state according to various embodiments of the present disclosure.
FIG. 3 is a flowchart illustrating operations of a vehicle according to various embodiments of the present disclosure.
FIG. 4 is a flowchart illustrating execution of a minimal risk maneuver by the vehicle according to various embodiments of the present disclosure.
FIG. 5 is a flowchart illustrating execution of limited autonomous driving using an imaginary lane by the vehicle according to various embodiments of the present disclosure.
FIG. 6 is a flowchart illustrating execution of emergency stop through immediate deceleration by the vehicle according to various embodiments of the present disclosure.

### [Mode for Invention]

Hereinafter, embodiments are described in more detail with reference to accompanying drawings.

The construction and operational effect of the present disclosure will be clearly understood from the following detailed description. Prior to describing exemplary embodiments of the present disclosure in detail, it is noted that throughout the drawings the same components will be denoted by the same reference numerals when possible and a detailed description about existing components and functions is omitted when the subject matter of the present disclosure may be obscured by the description.

It is also noted that terms used in the detailed description of the present disclosure are defined below.

The vehicle refers to a vehicle in which the automated driving system (ADS) is provided and is capable of the autonomous driving. For example, by the ADS, the vehicle may perform at least one among steering, acceleration, deceleration, lane change and vehicle stopping (short stop) without a driver's manipulation. For example, the ADS may include at least one among Pedestrian Detection and Collision Mitigation System (PDCMS), Lane Change Decision Aid System (LCDAS), Land Departure Warning System (LDWS), Adaptive Cruise Control (ACC), Lane Keeping Assistance System (LKAS), Road Boundary Departure Prevention System (RBDPS), Curve Speed Warning System (CSWS), Forward Vehicle Collision Warning System (FVCWS), and Low Speed Following (LSF).

A driver is a human being who uses a vehicle, and is provided with a service of an autonomous driving system.

The vehicle control authority is an authority to control at least one component of the vehicle and/or at least one function of the vehicle. At least one function of the vehicle may include, for example, at least one among steering, acceleration, deceleration (or braking), lane change, lane detection, lateral control, obstacle recognition and distance detection, powertrain control, safe area detection, engine on/off, power on/off, and vehicle lock/unlock. The listed functions of the vehicle are merely examples for helping understanding, and embodiments of the present disclosure are not limited thereto.

A shoulder may mean a space between an outermost road boundary (or a boundary of an outermost lane) in a direction in which a vehicle is traveling and a road edge (e.g., kerb, guardrail).

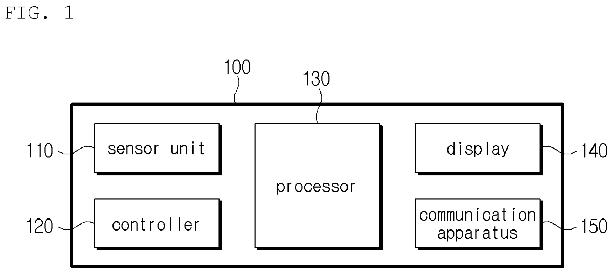

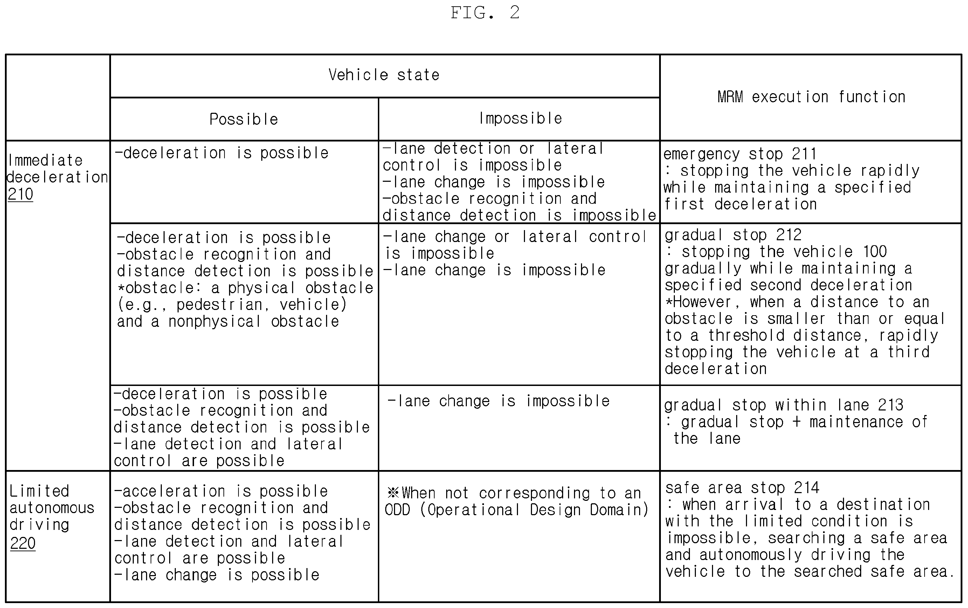

FIG. 1 is a block diagram of a vehicle according to various embodiments of the present disclosure. The configuration of the vehicle illustrated in FIG. 1 is one embodiment, and each component may be configured as one chip, one component, or one electronic circuit, or a combination of chips, components and/or electronic circuits. According to the embodiment, some of the components illustrated in FIG. 1 may be divided into a plurality of components and configured as different chips, different components, or different electronic circuits, and some components may be combined to form one chip, one component, or one electronic circuit. According to the embodiment, some of the components illustrated in FIG. 1 may be omitted or other components not illustrated may be added. At least some of the components of FIG. 1 will be described with reference to the FIGS. 2. FIG. 2 is a view illustrating minimal risk maneuver (MRM) types according to a vehicle state according to various embodiments of the present disclosure.

Referring to FIG. 1, the vehicle 100 may include a sensor unit 110, a controller 120, a processor 130, a display 140, and a communication apparatus 150.

According to various embodiments, the sensor unit 110 may sense a surrounding environment of the vehicle 100 using at least one sensor, and generate data related to the surrounding environment based on the sensed result. For example, the sensor unit 110 may obtain information on objects around the vehicle (for example, other vehicle, a person, an object, a kerb, a guardrail, a lane, an obstacle) based on the sensed data obtained from at least one sensor. Information on the object around the vehicle may include at least one among a position of the object, a size of the object, a shape of the object, a distance to the object, and a relative speed to the object. The sensor unit 110 may measure a position of the vehicle 100 using at least one sensor. The sensor unit 110 may include, for example, at least one selected among a camera, a light detection and ranging (LIDAR) sensor, a radio detection and ranging (RADAR) sensor, an ultrasonic sensor, an infrared sensor, and a position measurement sensor. The listed sensors are merely examples for helping understanding, and the sensors of the present disclosure are not limited thereto.

According to the embodiment, a camera may generate image data which includes an object positioned in front, at a rear and on a side of the vehicle 100, by capturing image around the vehicle. According to the embodiment, the lidar may generate information on an object positioned in front, at a rear and/or on a side of the vehicle 100 using light (or laser). According to the embodiment, the radar may generate information on an object positioned in front, at a rear and/or on a side of the vehicle 100 using electromagnetic waves (or radio waves). According to the embodiment, the ultrasonic sensor may generate information on an object positioned in front, at a rear and/or on a side of the vehicle 100 using ultrasonic waves. According to the embodiment, the infrared sensor may generate information on an object positioned in front, at a rear and/or on a side of the vehicle 100 using infrared rays.

According to the embodiment, the position measurement sensor may measure the current position of the vehicle 100. The position measurement sensor may include at least one among a Global Positioning System (GPS) sensor, a Differential Global Positioning System (DGPS) sensor and a Global Navigation Satellite System (GNSS) sensor. The position measurement sensor may generate position data of the vehicle based on a signal generated by at least one among a GPS sensor, DGPS sensor and GNSS sensor.

According to various embodiments, the controller 120 may control operation of at least one component of the vehicle 100 and/or at least one function of the vehicle according to the control of the processor 130. The at least one function may be, for example, at least one among a steering function, an acceleration function (or a longitudinal acceleration function), a deceleration function (or a longitudinal deceleration function, a brake function), a lane change function, a lane detection function, an obstacle recognition and distance detection function, a lateral control function, a powertrain control function, a safe area detection function, an engine on/off, a power on/off, and a vehicle lock/unlock function.

According to the embodiment, the controller 120 may control at least one component of the vehicle and/or at least one function of the vehicle for autonomous driving and/or a minimal risk maneuver (MRM) of the vehicle 100 according to the control of the processor 130. For example, for the minimal risk maneuver, the controller 120 may control the operation of at least one function among a steering function, an acceleration function, a deceleration function, a lane change function, a lane detection function, a lateral control function, an obstacle recognition and distance detection function, a powertrain control function, and a safe area detection function.

According to various embodiments, the processor 130 may control the overall operation of the vehicle 100. According to the embodiment, the processor 130 may include an electrical control unit (ECU) capable of integrally controlling components in the vehicle 100. For example, the processor 130 may include a central processing unit (CPU) or a micro processing unit (MCU) capable of performing arithmetic processing.

According to various embodiments, when a specified event is generated, the processor 130 may activate the Automated Driving System (ADS) to control components in the vehicle 100 such that the vehicle performs autonomous driving. The specified event may be generated when autonomous driving of the driver is requested, vehicle control authority from the driver is delegated, or a condition specified by the driver and/or designer is satisfied.

According to an embodiment, the processor 130 may determine whether the normal autonomous driving is possible based on at least one among vehicle state information and surrounding environment information, during the autonomous driving. According to an embodiment, from the time when ADS is activated, the processor 130 may obtain vehicle state information indicating whether mechanical and/or electrical faults of components inside the vehicle occur or not, by monitoring mechanical and/or electrical states of components inside the vehicle (e.g., sensors, actuators and the like). The vehicle state information may include information about mechanical states and/or electrical states of components inside the vehicle. For example, the vehicle state information may include information indicating whether functions necessary for autonomous driving can normally operate or not according to mechanical and/or electrical states of components inside the vehicle. According to an embodiment, the processor 130 may obtain environment information around the vehicle through the sensor unit 110, from the time when ADS is activated.

The processor 130 may determine whether functions needed for autonomous driving are normally operable based on the vehicle state information. Functions needed for autonomous driving may include, for example, at least one among a lane detection function, a lane change function, a lateral control function, a deceleration (or brake control) function, a powertrain control function, a safe area detection function, an obstacle recognition and distance detection function. When the normal operation of at least one among the functions needed for autonomous driving is impossible, the processor 130 may determine that normal autonomous driving is impossible. For example, when the obstacle (e.g., other vehicle, other pedestrian) recognition function is impossible to normally operate, the processor may determine that normal autonomous driving is impossible because collision with an obstacle cannot be prevented.

The processor 130 may determine whether the vehicle state is suitable for general driving conditions based on the vehicle state information. For example, the processor 130 may determine whether the vehicle's mechanical state information (e.g., tire pressure information or engine overheat information) is suitable for general driving conditions. When the vehicle state is not suitable for general driving conditions, the processor 130 may determine that normal autonomous driving is impossible. For example, the processor 130 may determine that normal autonomous driving is impossible when the vehicle cannot travel due to tire pressure or engine overheat.

According to the embodiment, the processor 130 may determine whether an environment around the vehicle is suitable for an operation design domain (ODD) of autonomous driving based on at least one among the surrounding environment information. The operation design domain may represent a condition for the surrounding environment in which autonomous driving normally operates. The processor 130 may determine that normal autonomous driving is impossible when the surrounding environment information of the vehicle does not match the operation design domain.

According to various embodiments, when the normal autonomous driving is impossible, the processor 130 may determine it as a situation in which the MRM to minimize the risk of an accident is needed. The processor 130 may determine the MRM type in a situation in which the MRM execution is needed. The processor 130 may select at least one MRM type among a plurality of MRM types, in a situation where execution of the MRM is needed.

According to various embodiments, when the normal autonomous driving is impossible, the processor 130 may determine whether a reason why the normal autonomous driving is impossible is a serious problem. For example, the processor 130 may determine whether the reason why the normal autonomous driving is impossible is a serious problem based on the vehicle state information and/or the surrounding environment information.

According to an embodiment, when the vehicle state information indicates that at least one among the functions needed for the autonomous driving does not normally operate, the processor 130 may determine that the reason why the normal autonomous driving is impossible is a serious problem. The functions needed for the autonomous driving may include, for example, at least one among a lane detection function, a lane change function, a lateral control function, a deceleration (or brake control) function, a powertrain control function, a safe area detection function, an obstacle recognition and distance detection function.

As another example, when all the functions needed for the autonomous driving normally operate but a problem regarding additional functions related to the autonomous driving is detected, the processor 130 may determine that the reason why the normal autonomous driving is impossible is not a serious problem. The additional functions related to the autonomous driving may include at least one among, for example, a function for verifying a vehicle position, a function for checking whether vehicle surrounding environment is suitable for the ODD, and functions related to communication and security. For example, when a problem in the additional functions related to the autonomous driving occurs may include, for example, a case where the current position of the vehicle cannot be figured out due to a GPS signal error, a case where whether the vehicle is traveling in the ODD cannot be figured out due to a map information error, a case where an environment around the vehicle is not suitable for the ODD, and/or a case where there is an attempt of unauthorized communication or attack from the outside.

According to various embodiments, the processor 130 may select at least one type of the minimal risk maneuver among a plurality of types of the minimal risk maneuver, as illustrated in FIG. 2, based on whether the reason why the normal autonomous driving is impossible is a serious problem.

According to an embodiment, as illustrated in FIG. 2, the types of the minimal risk maneuver may be divided into an immediate deceleration type 210 and a limited autonomous driving type 220.

According to an embodiment, the immediate deceleration type 210 may be a type of immediately stopping the vehicle by initiating the immediate deceleration function when the immediate deceleration type is determined. The immediate deceleration type may include an emergency stop type 211, a gradual stop type 212, and a gradual stop within lane type 213.

The emergency stop type 211 may be a type of linear stopping based on a specified first deceleration. According to an embodiment, the emergency stop type 211 may be selected when lane detection and/or lateral control, lane change, and obstacle recognition and distance detection are impossible to be executed and deceleration is possible to be executed by the vehicle 100. A deceleration value capable of rapidly stopping the vehicle may be set to be the specified first deceleration.

The gradual stop type 212 may be a type of linear stopping based on a specified second or third deceleration. According to an embodiment, the gradual stop type 212 may be selected when lane detection and/or lateral control and lane change are impossible to be executed, and deceleration and obstacle recognition and distance detection are possible to be executed by the vehicle 100. The specified second deceleration is a deceleration value capable of gradually stopping the vehicle, and may be used when there is no obstacle in a forward direction of the vehicle, or a distance to an obstacle positioned in front of the vehicle is greater than a threshold distance. A value smaller than the specified first deceleration may be set to be the specified second deceleration. The specified third deceleration is a deceleration value capable of rapidly stopping the vehicle, and may be used when a distance to an obstacle positioned in front of the vehicle is smaller than or equal to a threshold distance so as to prevent a collision with the obstacle in front thereof. A value greater than the specified second deceleration and smaller than or equal to the specified first deceleration may be set to be the specified third deceleration.

The gradual stop within lane type 213 may allow vehicle stop within a lane, which maintains the vehicle to be in the lane while stopping the vehicle according to the gradual stop type 212. For example, the gradual stop within lane type 213 may control the vehicle to stop within the lane in which the vehicle travels through a steering wheel control while stopping the vehicle based on the specified second deceleration or the specified third deceleration. According to an embodiment, the gradual stop within lane type 213 may be selected when lane change is impossible to be executed, and deceleration, obstacle recognition and distance detection, lane detection and/or lateral control are possible to be executed by the vehicle 100.

According to an embodiment, the limited autonomous driving type 220 may be a type of stopping the vehicle in a destination or a safe area after performing the autonomous driving with a limited condition, when the type of the minimal risk maneuver is determined. The limited autonomous driving type 220 may mean the autonomous driving of which at least one among a maximum speed, a maximum output power, a range of lane change, a traveling allowable time, and a traveling allowable distance is limited. The maximum speed of the limited autonomous driving type 220 may be limited to a value lower than a maximum speed of the normal autonomous driving. The maximum output power of the limited autonomous driving type 220 may be limited to a value lower than a maximum output power of the normal autonomous driving. The lane change of the limited autonomous driving type 220 may be limited not to allow lane change in a direction of a passing lane. For example, the lane change of the limited autonomous driving type 220 may only be allowed in a direction away from a center line. The traveling allowable time, and the traveling allowable distance of the limited autonomous driving type 220 may be limited to a time and/or a distance specified by a designer.

The limited autonomous driving type 220 may include a safe area stop type 214.

The safe area stop type 214 may be a type of stopping the vehicle in a safe area. The safe area is an area at which the vehicle can arrive through the limited autonomous driving, and may include at least one among a shoulder of a road, a merging lane, a rest area, and an area within a parking lane. According to an embodiment, the safe area stop type 214 may be selected, when deceleration, lane detection and/or lateral control, lane change, and obstacle recognition and distance detection are impossible to be executed by the vehicle 100 but the vehicle surrounding environment is not suitable for the ODD (Operation Design Domain) of the autonomous driving, and the vehicle 100 cannot arrive at the destination based on the limited condition.

In the above description, selection of the type of the minimal risk maneuver is described based on whether functions of deceleration, lane detection and/or lateral control, lane change, and obstacle recognition and distance detection among functions of the vehicle operate normally, however, various embodiments of the present disclosure are not necessarily limited thereto. For example, whether at least one other function, except the mentioned functions for selecting the type of the minimal risk maneuver, operates normally may be considered as well. For example, it is possible to select the type of the minimal risk maneuver by considering at least one more among a powertrain function, and a safe area detection function.

According to various embodiment, the processor 130 may select the limited autonomous driving type 220 when the reason why the normal autonomous driving is impossible is not a serious problem, that is, the minimal risk maneuver is needed even though all the functions needed for the autonomous driving normally operate. When the limited autonomous driving type 220 is selected, the processor 130 may determine whether the autonomous driving to the destination is possible with a limited condition. The limited condition may include at least one among a limited maximum speed, a limited maximum output power, a limited range of lane change, a limited traveling allowable time, a limited traveling allowable distance of the limited autonomous driving. The processor 130 may determine whether the autonomous driving to the destination is possible, with the limited condition, based on the limited condition, the current position, the destination, and a path from the current position to the destination. When the autonomous driving with the limited condition to the destination is possible, the processor 130 may autonomously travel to the destination based on the limited condition. When the autonomous driving with the limited condition to the destination is impossible, the processor 130 may determine to perform emergency stop according to the safe area stop type 214.

According to an embodiment, the processor 130 may search a safe area and set a path to the searched safe area when the emergency stop according to the safe area stop type 214 is determined. The safe area may be searched based on sensing data obtained from the sensor unit 110 (e.g., image data obtained from the camera), and/or map data. The map data may include information on the safe area (e.g., an image of the safe area). The processor 130 may control the vehicle to emergently stop in a safe area after executing the limited autonomous driving to the safe area along a set path while detecting a lane in which the vehicle travels and/or a neighboring lane through the lane detection function.

According to an embodiment, the processor 130 may control the vehicle 100 to autonomously drive to a destination or a safe area using an imaginary lane, when the lane detection through the surrounding environment is impossible in a state in which the limited autonomous driving type is selected. For example, the processor 130 may generate an imaginary lane based on a position in which the vehicle 100 travels, when the lane detection function operates normally but the lane cannot be detected because of heavy snowfall or rainfall and the like. The processor 130 may control the vehicle 100 to execute the limited autonomous driving to a destination or a safe area in a manner of executing the lane change based on the generated imaginary lane, and then, generating a new imaginary lane in a changed lane. At this instance, the lane change may only be executed in a direction away from the center line. For example, in Korea, it is possible to change a lane to only a right lane of the lane in which the vehicle 100 travels based on a direction in which the vehicle 100 travels. The processor 130 may determine the current lane to be the outermost lane, when an obstacle of a specified type such as a kerb or a guardrail is detected at a point where the imaginary lane is generated or a nearby point.

According to an embodiment, when the immediate deceleration type is selected, the processor 130 may select one type among the types corresponding to the immediate deceleration type based on functions normally operate among the functions needed for the autonomous driving, and may execute the emergency stop according to the selected type. According to an embodiment, the processor 130 may select one type among the types corresponding to the immediate deceleration type based on functions impossible to normally operate, and may execute the emergency stop according to the selected type. According to an embodiment, the processor 130 may select the emergency stop type 211 when lane detection and/or lateral control, lane change, and obstacle recognition and distance detection functions are impossible to normally operate and the deceleration function normally operates. The emergency stop type 211 is a type of stopping the vehicle rapidly based on the specified first deceleration, and does not need lateral control of the vehicle 100. The processor 130 may control the vehicle 100 to stop at the first deceleration according to the emergency stop type.

According to an embodiment, the processor 130 may select the gradual stop type when lane detection and/or lateral control, and lane change functions are impossible to be executed and deceleration and obstacle recognition and distance detection functions are possible to be executed by the vehicle 100. The gradual stop type 212 is a linear stop type of stopping the vehicle 100 at the specified second deceleration, or the specified third deceleration based on presence of an obstacle and/or a distance to an obstacle, and does not need lateral control of the vehicle. The processor 130 may control the vehicle to stop at the second deceleration or the third deceleration based on the presence of an obstacle and/or the distance to an obstacle according to the gradual stop type.

According to an embodiment, the processor 130 may select the gradual stop within lane type when a lane change function is impossible to be executed, and deceleration, lane detection and/or lateral control, and obstacle recognition and distance detection functions are possible to be executed. The gradual stop within lane type is a type of stopping the vehicle based on the specified second deceleration or the specified third deceleration based on the presence of an obstacle and/or the distance to an obstacle like the gradual stop type, and maintaining the vehicle to be in the lane through lateral control so that the vehicle does not leave the lane. The processor 130 may control the vehicle 100 to stop based on the specified second deceleration or the specified third deceleration based on the presence of an obstacle and/or the distance to an obstacle, while maintaining to be in the lane in which the vehicle travels according to the gradual stop within lane type.

According to various embodiments, the processor 130 may control the vehicle to notify information that the minimal risk maneuver (MRM) is underway to another vehicle and/or the driver while performing control operation to stop the vehicle according to the MRM type. For example, the processor 130 may control the display 140 to notify the driver that the MRM is underway. As another example, the processor 130 may control the communication apparatus 150 to notify another vehicle that the MRM is underway. These are merely examples for helping understanding, and a manner of notifying that the MRM is underway is not limited thereto.

According to various embodiments, the processor 130 may perform the control operation to stop the vehicle according to the determined MRM type and may determine whether a minimal risk condition (MRC) is satisfied. The MRC may mean a stopped state in which the vehicle speed is 0. For example, the processor 130 may determine whether the vehicle 100 gets into a stopped state in which the speed of the vehicle 100 is 0 while performing at least one operation according to the determined MRM type. When the vehicle 100 gets into a state where the speed is 0, the processor 130 may determine that the MRC is satisfied.

According to various embodiments, when the MRC is satisfied, the processor 130 may end the MRM operation and switch the autonomous driving system (ADS) to a standby mode or an off-state. According to an embodiment, the processor 130 may control the autonomous driving system (ADS) to be transferred to the driver (or user) after switching the autonomous driving system (ADS) to the standby mode or off-state.

According to various embodiments, the display 140 may visually display information related to the vehicle 100. For example, the display 140 may provide various information related to the state of the vehicle 100 to the driver of the vehicle 100 under the control of the processor 130. The various information related to the state of the vehicle may include at least one among information indicating whether various components included in the vehicle and/or at least one function of the vehicle is normally operated, and information indicating the driving state of the vehicle. The driving state of the vehicle may include, for example, at least one among a state in which the vehicle is autonomously driving, a state in which the MRM is underway, a state in which the MRM is completed, and a state in which autonomous driving is ended.

According to various embodiments, the communication apparatus 150 may communicate with an external device of the vehicle 100. According to embodiments, the communication apparatus 150 may receive data from the external device of the vehicle 100 or transmit data to the external device of the vehicle 100 under the control of the processor 130. For example, the communication apparatus 150 may perform communication using a wireless communication protocol or a wired communication protocol.

**In** FIG. 1 described above, the controller 120 and the processor 130 have been described as separate components, but according to various embodiments, the controller 120 and the processor 130 may be integrated into one component.

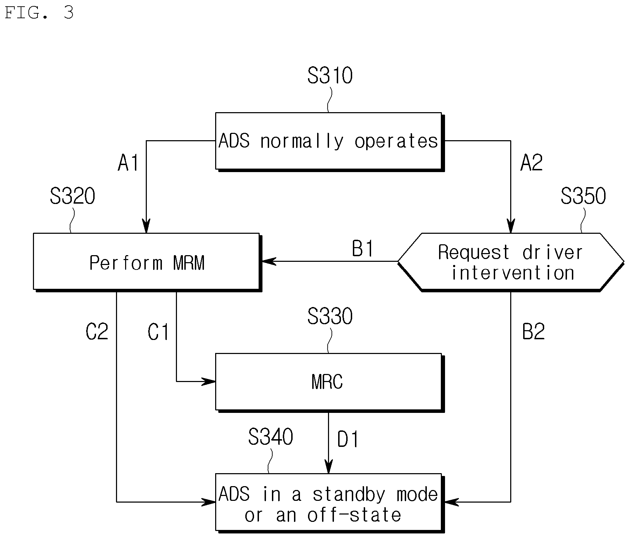

FIG. 3 is a flowchart illustrating operations of a vehicle according to various embodiments of the present disclosure. The vehicle of FIG. 3 may be the vehicle 100 of FIG. 1.

Referring to FIG. 3, the vehicle 100 may normally operate the ADS in an operation S310.

According to an embodiment, the vehicle 100 may monitor the vehicle state and the surrounding environment while performing the autonomous driving according to the normal operation of the ADS. The vehicle 100 may sense whether the MRM is needed based on information obtained by monitoring the vehicle state and the surrounding environment. If the MRM is needed, an event A1 may be generated.

According to the embodiment, the vehicle 100 may sense whether the driver (or user) intervention is required while performing the autonomous driving according to the normal operation of the ADS. When driver intervention is required, the vehicle 100 may perform a Request To Intervene (RTI) through the ADS or issue a warning. The driver intervention request or warning may be an event A2. The vehicle 100 may proceed to an operation S320 when the event A1 occurs in a state in which the ADS is normally operated.

When the event A2 occurs in a state in which the ADS operates normally, in an operation S350, the vehicle 100 may determine whether the driver intervention is sensed within a specified time. The vehicle 100 may determine that an event B1 has occurred when no driver intervention is sensed within the specified time. When the event B1 occurs, the vehicle 100 may proceed to an operation S320. The vehicle 100 may determine that an event B2 has occurred when the driver intervention is sensed within a specified time. When the event B2 occurs, the vehicle 100 may proceed to an operation S340.

The vehicle 100 may perform the MRM in the operation S320. According to an embodiment, the vehicle 100 may determine the MRM type based on at least one among the vehicle state information and the surrounding environment information. As illustrated in FIG. 2, the MRM type may be divided into the immediate deceleration type 210 and the limited autonomous driving type 220. The immediate deceleration type 210 may include the emergency stop type 211, the gradual stop type 212, and the gradual stop within lane type 213. The limited autonomous driving type 220 may include the safe area stop type 214. The vehicle 100 may control at least one component in the vehicle to stop the vehicle according to the determined MRM type. According to an embodiment, the vehicle 100 may notify information indicating that the vehicle executes the MRM to another vehicle and/or the driver. According to an embodiment, the vehicle 100 may activate an MRM operating ramp when the MRM is initiated, and may notify another vehicle and/or the driver that the MRM is underway through the activated MRM operating ramp.

In an operation S320, the vehicle 100 may determine whether the minimal risk condition is satisfied as the speed of the vehicle becomes 0 through execution of the MRM. When the minimal risk condition is satisfied, the vehicle 100 may determine that an event C1 has occurred and proceed to an operation S330. The vehicle 100 may determine whether the driver's intervention is sensed while the MRM is underway. When the driver's intervention is sensed, the vehicle 100 may determine that an event C2 has occurred and proceed to the operation S340.

In the operation S330, the vehicle 100 may maintain a state in which the minimal risk condition is satisfied. The state in which the minimal risk condition is satisfied may mean a state in which the vehicle is stopped. For example, the vehicle 100 may maintain a stopped state. For example, the vehicle 100 may perform control operation for maintaining the vehicle in a stopped state regardless of an inclination of a road surface of the stopped position. The vehicle 100 may determine whether an event D1 occurs while maintaining a state in which the minimal risk condition is satisfied. The event D1 may include at least one among ADS being turned off the by the driver, and completion to transfer the vehicle control authority to the driver. When the event D1 occurs, the vehicle 100 may proceed to the operation S340.

The vehicle 100 may switch the ADS into a standby mode or an off-state in the operation S340. The vehicle 100 may not perform operation for the autonomous driving while the ADS is in a standby mode or an off-state.

The operations S310, S320, S330, and S350 described above may be in a state in which the ADS is activated, and the operation S340 may be in a state in which the ADS is inactive.

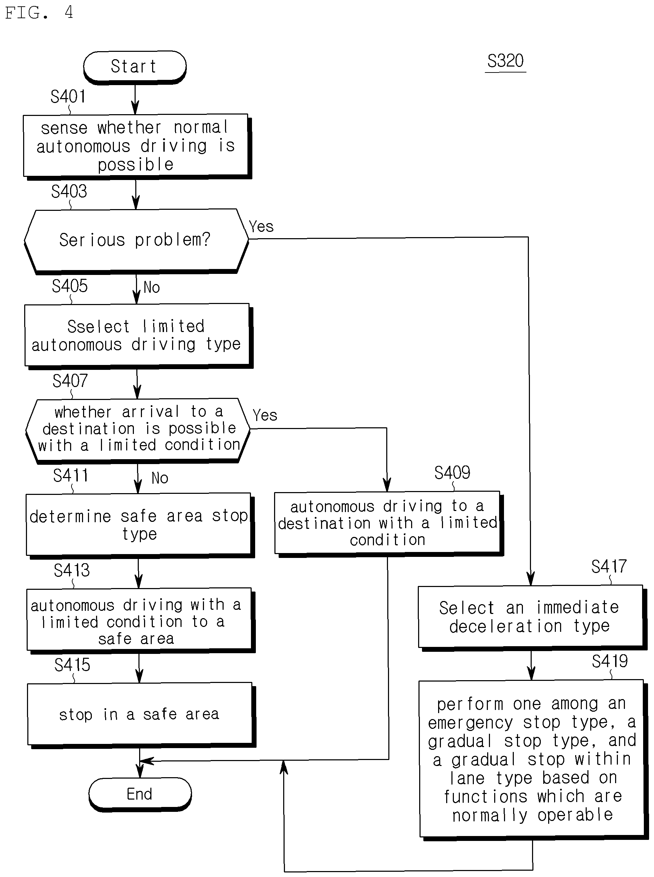

FIG. 4 is a flowchart illustrating execution of the minimal risk maneuver by the vehicle according to various embodiments of the present disclosure. The operations of FIG. 4 may be the detailed operations of the operation S320 of FIG. 3. In the following embodiment, each operation may be sequentially performed, but may be not necessarily performed sequentially. For example, the order of each operation may be changed, and at least two operations may be performed in parallel. **In** addition, the operations described hereinafter may be performed by the processor 130 and/or the controller 120 provided in the vehicle 100 or implemented as instructions executable by the processor 130 and/or the controller 120.

Referring to FIG. 4, the vehicle 100 may sense whether normal autonomous driving is possible based on the vehicle state information and the surrounding environment information, in an operation S401. According to the embodiment, the vehicle 100 may sense that the normal autonomous driving is impossible when at least one among the functions needed for the autonomous driving does not normally operate, or a problem in the additional functions related to the autonomous driving is sensed. For example, the functions needed for the autonomous driving may include at least one among the lane detection function, the lane change function, the lateral control function, the deceleration (or brake control) function, the powertrain control function, the safe area detection function, and the obstacle recognition and distance detection function. In an operation S403, the vehicle 100 may determine whether the reason why the normal autonomous driving is impossible corresponds to a serious problem. For example, when all the functions needed for the autonomous driving normally operate but a problem in the additional functions related to the autonomous driving occurs and thus, the MRM is needed, the vehicle 100 may determine that the reason why the normal autonomous driving is impossible is not a serious problem. As another example, when the vehicle state information indicates that at least one among the functions needed for the autonomous driving does not normally operate, the vehicle 100 may determine that the reason why the normal autonomous driving is impossible is a serious problem.

When the reason why the normal autonomous driving is impossible is not a serious problem, the vehicle 100 may select the limited autonomous driving type in an operation S405. The limited autonomous driving type may mean the autonomous driving of which at least one among a maximum speed, a maximum output power, a range of lane change, a traveling allowable time, and a traveling allowable distance is limited.

The vehicle 100 may determine whether arrival to the destination is possible with the limited condition, in an operation S407. The limited condition may include at least one among a limited maximum speed, a limited maximum output power, a limited range of lane change, a limited traveling allowable time, a limited traveling allowable distance of the limited autonomous driving. The vehicle 100 may determine whether the autonomous driving to the destination is possible, with the limited condition, based on at least one among the limited condition, the current position of the vehicle, the destination, and a path from the current position to the destination. For example, the vehicle 100 may check a distance from the current position to the destination, and when the checked distance exceeds a limited allowable distance, the vehicle 100 may determine that arrival to the destination is impossible with the limited condition. When the checked distance does not exceed the limited allowable distance, the vehicle 100 may determine that arrival to the destination is possible with the limited condition.

When arrival to the destination is possible with the limited condition, the vehicle 100 may perform the limited autonomous driving, which executes the autonomous driving to the destination with the limited condition, in an operation S409.

When arrival to the destination is impossible with the limited condition, the vehicle 100 may determine the safe area stop type to be a type of the emergency stop in an operation S411. The safe area stop type may be a type that the vehicle moves into a safe area such as a shoulder of a road, a merging lane, or a rest area, and then, emergently stops in the safe area.

The vehicle 100 may perform the autonomous driving with the limited condition to the safe area in an operation S413, and then, stop in the safe area in an operation S415. For example, the vehicle 100 may search a safe area such as a shoulder of a road, a merging lane, or a rest area positioned in the limited traveling allowable distance based on the current position of the vehicle 100, may determine it to be the safe area, and may move into the determined safe area by executing the limited autonomous driving. The determined safe area may be set as a destination for the emergency stop. According to an embodiment, the vehicle 100 may search the safe area at which the vehicle 100 may arrive through the limited autonomous driving based on data and/or map data obtained from the sensor, and may obtain information on a position and a path of the searched safe area. For example, the vehicle 100 may search the safe area based on information obtained from the camera. As another example, the vehicle 100 may search and/or set the safe area by comparing an image obtained from a camera with a prestored image of a safe area.

As a result of check according to the operation S401, when the reason why the normal autonomous driving is impossible is a serious problem, the vehicle 100 may select the immediate deceleration type in an operation S417. The immediate deceleration type may be a type of immediately initiating the deceleration function when the immediate deceleration type is determined, and may include an emergency stop type, a gradual stop type, and a gradual stop within lane type.

The vehicle 100 may perform at least one among the emergency stop type, the gradual stop type, and the gradual stop within lane type based on functions which are normally operable among the functions needed for the autonomous driving, in an operation S419. According to an embodiment, the vehicle 100 may determine one among the emergency stop type, the gradual stop type, and the gradual stop within lane type, based on functions which are normally operable among the functions needed for the autonomous driving, to be the MRM type, and may perform an operation of emergency stop according to the determined type. An operation 417 will be described in detail with reference to FIG. 7 which will be described below.

In the above-description, a situation has been described where the vehicle 100 selects the safe area stop type to be the MRM type and moves into and stops in the safe area through the limited autonomous driving, when arrival to the destination through the limited autonomous driving is impossible after the limited autonomous driving has been determined. However, a situation where there is no safe area at which the vehicle 100 can arrive through the limited autonomous driving from the current position of the vehicle, or the vehicle 100 cannot move into the safe area through the limited autonomous driving because of an unexpected situation may occur, depending on the circumstances. In such a situation, the vehicle 100 may change the MRM type to one among the emergency stop type, the gradual stop type, and the gradual stop within lane type corresponding to the immediate deceleration type.

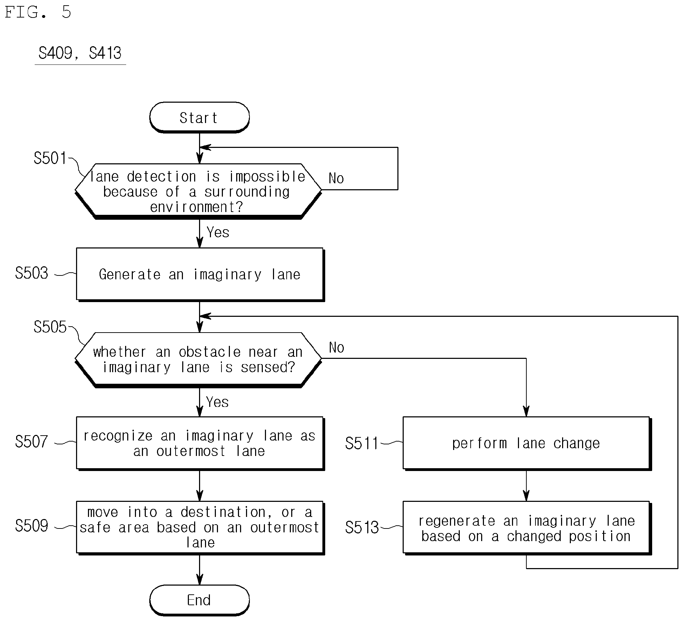

FIG. 5 is a flowchart illustrating execution of limited autonomous driving using an imaginary lane by the vehicle according to various embodiments of the present disclosure. The operations of FIG. 5 may be the detailed operations of the operation S409 or the operation S413 of FIG. 4. In the following embodiment, each operation may be sequentially performed, but may be not necessarily performed sequentially. For example, the order of each operation may be changed, and at least two operations may be performed in parallel. In addition, the operations described hereinafter may be performed by the processor 130 and/or the controller 120 provided in the vehicle 100 or implemented as instructions executable by the processor 130 and/or the controller 120.

Referring to FIG. 5, in an operation S501, the vehicle 100 may determine whether the vehicle 100 is in a situation where the lane detection is impossible because of the surrounding environment. For example, the vehicle 100 may determine whether the vehicle 100 is in a situation where the lane detection is impossible because of the surrounding environment such as heavy snowfall or rainfall, although the lane detection function operates normally. When the vehicle 100 is not in a situation where the lane detection is impossible because of the surrounding environment, that is, the vehicle 100 is in a situation where the lane detection is possible, the vehicle 100 may continuously check whether the situation where the lane detection is impossible because of the surrounding environment occurs, while executing the limited autonomous driving to move into the destination or the safe area using the lane detection function.

When the vehicle 100 is in a situation where the lane detection is impossible because of the surrounding environment, the vehicle 100 may generate an imaginary lane in an operation S503. The imaginary lane may be generated based on the current position of the vehicle 100. For example, the vehicle 100 may generate boundaries of the imaginary lane on both side of the current position of the vehicle.

In an operation S505, the vehicle 100 may determine whether an obstacle near the imaginary lane is sensed. For example, the vehicle 100 may determine whether an obstacle (e.g., kerb, guardrail) is sensed in an area near the imaginary lane in which the vehicle 100 travels, based on data collected from the sensor.

When an obstacle near the imaginary lane is sensed, the vehicle 100 may recognize the imaginary lane in which the vehicle 100 travels as the outermost lane in an operation S507, and may move into the destination, or the safe area based on the outermost lane in an operation S509. The reason behind the movement into the destination or the safe area based on the outermost lane is that the destination or the safe area is positioned in an area near to the outermost lane in general.

When an obstacle near the imaginary lane is not sensed, the vehicle 100 may perform lane change based on the imaginary lane in which the vehicle 100 travels in an operation S511. For example, the vehicle 100 may perform lane change in a direction away from the center line, based on the imaginary lane in which the vehicle 100 travels.

The vehicle 100 may regenerate the imaginary lane based on the changed position of the vehicle 100 in an operation S513, and may return to the operation S501.

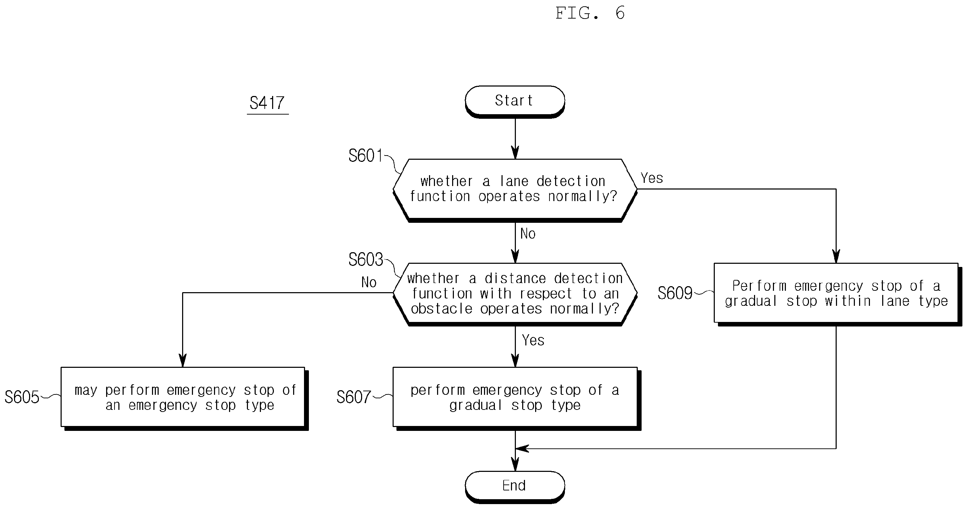

FIG. 6 is a flowchart illustrating execution of emergency stop through immediate deceleration by the vehicle according to various embodiments of the present disclosure. The operations of FIG. 6 may be the detailed operations of the operation S417 of FIG. 4. In the following embodiment, each operation may be sequentially performed, but may be not necessarily performed sequentially. For example, the order of each operation may be changed, and at least two operations may be performed in parallel. In addition, the operations described hereinafter may be performed by the processor 130 and/or the controller 120 provided in the vehicle 100 or implemented as instructions executable by the processor 130 and/or the controller 120.

Referring to FIG. 6, the vehicle 100 may determine whether the lane detection function can operate normally in an operation S601. For example, the vehicle 100 may determine whether the lane detection function can operate normally based on the vehicle state information.

When the lane detection function is impossible to normally operate, the vehicle 100 may determine whether the distance detection function with respect to an obstacle operates normally in an operation S603. For example, the vehicle 100 may determine whether the distance detection function with respect to an obstacle operates normally based on the vehicle state information.

When the distance detection function with respect to an obstacle is impossible to operate normally, the vehicle 100 may proceed to an operation S605, and may perform emergency stop of the emergency stop type. For example, when the lane detection function and the distance detection with respect to an obstacle are impossible to normally operate, the vehicle 100 may determine the emergency stop type to be the MRM type, and may perform the emergency stop operation according to the emergency stop type. For example, the vehicle 100 may stop rapidly based on the specified first deceleration.

When the distance detection function with respect to an obstacle is possible to operate normally, the vehicle 100 may proceed to an operation S607, and may perform emergency stop of the gradual stop type. When the lane detection function is possible to operate normally, but the distance detection function with respect to an obstacle is impossible to operate normally, the vehicle 100 may determine the gradual stop type to be the MRM type, and may perform emergency stop according to the gradual stop type. For example, the vehicle 100 may stop based on the specified second deceleration or the specified third deceleration based on presence of an obstacle and/or a distance to an obstacle. According to an embodiment, the specified second deceleration is a deceleration for gradually stopping the vehicle, and may be used when there is no obstacle in a forward direction of the vehicle, or a distance to an obstacle positioned in front of the vehicle is greater than a threshold distance. A value smaller than the specified first deceleration may be set to be the specified second deceleration. The specified third deceleration is a deceleration for rapidly stopping the vehicle, and may be used when a distance to an obstacle positioned in front of the vehicle is smaller than or equal to a threshold distance so as to prevent a collision with the obstacle in front thereof. A value greater than the specified second deceleration and smaller than or equal to the specified first deceleration may be set to be the specified third deceleration.

When the lane detection function is possible to operate normally, the vehicle 100 may perform emergency stop of the gradual stop within lane type in an operation S609. When the lane detection function and the distance detection function with respect to an obstacle are possible to operate normally, the vehicle 100 may determine the gradual stop within lane type to be the MRM type, and may perform emergency stop according to the gradual stop within lane type. The gradual stop within lane type is a type of maintaining the vehicle 100 to be in the lane while operating according to the gradual stop type. For example, the vehicle 100 may stop based on the specified second deceleration or the specified third deceleration based on the presence of an obstacle and/or the distance to an obstacle, and may maintain to be in the traveling lane through the steering wheel control.

As described above, in the various embodiments of the present disclosure, when a situation where the normal autonomous driving is impossible is sensed during the autonomous driving of the vehicle, it is possible to minimize risk of the vehicle and improve safety by determining the MRM type based on at least one function possible to operate normally, and performing emergency stop operations according to the determined MRM type.

In one or more exemplary embodiments, the functions described may be implemented in hardware, software, firmware, or any combination thereof. If implemented in software, the functions may be stored or transmitted over as one or more instructions or code on a computer-readable medium. Computer-readable media include both computer storage media and communication media including any medium that facilitates transfer of a computer program from one place to another. A storage medium may be any available medium that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared (IR), radio, and microwave, then the coaxial cable, fiber optic cable, twisted pair, DSL, or wireless technologies such as infrared, radio, and microwave are included in the definition of medium. Disk and disc, as used herein, include compact disc (CD), laser disc, optical disc, digital versatile disc (DVD), floppy disk, and Blu-ray^{®} disc where disks usually reproduce data magnetically, while discs reproduce data optically with lasers. Thus, in some aspects computer-readable media may comprise non-transitory computer-readable media (e.g., tangible media). In addition, for other aspects computer-readable media may comprise transitory computer- readable media (e.g., a signal). Combinations of the above should also be included within the scope of computer-readable media.

When the embodiments are implemented in program code or code segments, it should be appreciated that a code segment can represent a procedure, a function, a subprogram, a program, a routine, a subroutine, a module, a software package, a class, or any combination of instructions, data structures, or program statements. A code segment can be coupled to another code segment or a hardware circuit by passing and/or receiving information, data, arguments, parameters, or memory contents. Information, arguments, parameters, data, etc. can be passed, forwarded, or transmitted using any suitable means including memory sharing, message passing, token passing, network transmission, etc. Additionally, in some aspects, the steps and/or actions of a method or algorithm can reside as one or any combination or set of codes and/or instructions on a machine readable medium and/or computer readable medium, which can be incorporated into a computer program product.

For a software implementation, the techniques described herein can be implemented with modules (e.g., procedures, functions, and so on) that perform the functions described herein. The software codes can be stored in memory units and executed by processors. The memory unit can be implemented within the processor or external to the processor, in which case it can be communicatively coupled to the processor via various means as is known in the art.

For a hardware implementation, the processing units can be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a combination thereof.

What has been described above includes examples of one or more embodiments. It is, of course, not possible to describe every conceivable combination of components or methodologies for purposes of describing the aforementioned embodiments, but one of ordinary skill in the art may recognize that many further combinations and permutations of various embodiments are possible. Accordingly, the described embodiments are intended to embrace all such alterations, modifications and variations that fall within the spirit and scope of the appended claims. Furthermore, to the extent that the term "includes" is used in either the detailed description or the claims, such term is intended to be inclusive in a manner similar to the term "comprising" as "comprising" is interpreted when employed as a transitional word in a claim.

As used herein, the term to "infer" or "inference" refers generally to the process of reasoning about or inferring states of the system, environment, and/or user from a set of observations as captured via events and/or data. Inference can be employed to identify a specific context or action, or can generate a probability distribution over states, for example. The inference can be probabilistic-that is, the computation of a probability distribution over states of interest based on a consideration of data and events. Inference can also refer to techniques employed for composing higher-level events from a set of events and/or data. Such inference results in the construction of new events or actions from a set of observed events and/or stored event data, whether or not the events are correlated in close temporal proximity, and whether the events and data come from one or several event and data sources.

Furthermore, as used in this application, the terms "component," "module," "system," and the like are intended to refer to a computer-related entity, either hardware, firmware, a combination of hardware and software, software, or software in execution. For example, a component can be, but is not limited to being, a process running on a processor, a processor, an object, an executable, a thread of execution, a program, and/or a computer. By way of illustration, both an application running on a computing device and the computing device can be a component. One or more components can reside within a process and/or thread of execution and a component can be localized on one computer and/or distributed between two or more computers. In addition, these components can execute from various computer readable media having various data structures stored thereon. The components can communicate by way of local and/or remote processes such as in accordance with a signal having one or more data packets (e.g., data from one component interacting with another component in a local system, distributed system, and/or across a network such as the Internet with other systems by way of the signal).

## Claims

1. An autonomous driving vehicle, comprising:
at least one sensor configured to sense surrounding environment of the vehicle to generate surrounding environment information;
a processor configured to monitor state of the vehicle to generate vehicle state information and to control autonomous driving of the vehicle; and
a controller configured to control operation of the vehicle according to the control of the processor,
wherein the processor is configured to:
sense whether a minimal risk maneuver is needed based on at least one among the surrounding environment information and the vehicle state information during the autonomous driving of the vehicle;
determine a type of the minimal risk maneuver based on the vehicle state information when the minimal risk maneuver is needed; and
control the vehicle to stop based on the determined type of the minimal risk maneuver, and
wherein the type of the minimal risk maneuver comprises at least one among an immediate deceleration type and a limited autonomous driving type.

2. The autonomous driving vehicle of claim 1,
wherein the vehicle state information represents whether functions needed for autonomous driving are possible to operate normally, and
wherein the functions needed for autonomous driving comprise at least one among a lane detection function, a lane change function, a lateral control function, a deceleration function, a powertrain control function, a safe area detection function, and an obstacle recognition and distance detection function.

3. The autonomous driving vehicle of claim 2,
wherein the processor is configured to:
determine whether at least one function among the functions needed for the autonomous driving is impossible to operate normally based on the vehicle state information, and
determine the immediate deceleration type to be the type of the minimum risk maneuver when at least one function among the functions needed for the autonomous driving is impossible to operate normally.

4. The autonomous driving vehicle of claim 3,
wherein the immediate deceleration type comprises at least one among
an emergency stop type of stopping the vehicle at a specified first deceleration;
a gradual stop type of selecting one among a second deceleration and a third deceleration based on at least one among presence of an obstacle and a distance to the obstacle and stopping the vehicle at the selected deceleration; and
a gradual stop within lane type of selecting one among the second deceleration and the third deceleration based on at least one among presence of an obstacle and a distance to the obstacle and maintaining to be in a lane while stopping the vehicle at the selected deceleration,
wherein the second deceleration is smaller than the first deceleration, and
wherein the third deceleration is greater than the second deceleration and smaller than or equal to the first deceleration.

5. The autonomous driving vehicle of claim 4,
wherein the processor is configured to:
determine the emergency stop type to be the type of the minimal risk maneuver when the lane detection function, the lateral control function, the lane change function, the obstacle recognition and distance detection function are impossible to operate normally and the deceleration function operates normally among the functions needed for the autonomous driving, and
control the vehicle to be stopped at the first deceleration according to the emergency stop type.

6. The autonomous driving vehicle of claim 4,
wherein the processor is configured to:
determine the gradual stop type to be the type of the minimal risk maneuver when the lane detection function, the lateral control function, the lane change function are impossible to operate normally and the deceleration function and the obstacle recognition and distance detection function operate normally among the functions needed for the autonomous driving,
detect the presence of an obstacle or the distance to the obstacle according to the gradual stop type,
control the vehicle to be stopped at the second deceleration when there is no obstacle in a forward direction of the vehicle as a result of the detection,
control the vehicle to be stopped at the second deceleration when there is an obstacle in a forward direction of the vehicle as a result of the detection, and the distance to the obstacle is greater than a specified threshold distance, and
control the vehicle to be stopped at the third deceleration when there is an obstacle in a forward direction of the vehicle as a result of the detection, and the distance to the obstacle is smaller than or equal to a specified threshold distance.

7. The autonomous driving vehicle of claim 4,
wherein the processor is configured to:
determine the gradual stop within lane type to be the type of the minimal risk maneuver when the lane change function is impossible to operate normally and the deceleration function, the obstacle recognition and distance detection function, the lane detection function, and the lateral control function operate normally among the functions needed for the autonomous driving,
detect the presence of an obstacle or the distance to the obstacle according to the gradual stop within lane type,
control the vehicle to be stopped at the second deceleration while maintaining to be in a lane in which the vehicle travels when there is no obstacle in a forward direction of the vehicle as a result of the detection,
control the vehicle to be stopped at the second deceleration while maintaining to be in a lane in which the vehicle travels when there is an obstacle in a forward direction of the vehicle as a result of the detection, and the distance to the obstacle is greater than a specified threshold distance, and
control the vehicle to be stopped at the third deceleration while maintaining to be in a lane in which the vehicle travels when there is an obstacle in a forward direction of the vehicle as a result of the detection, and the distance to the obstacle is smaller than or equal to a specified threshold distance.

8. The autonomous driving vehicle of claim 3,
wherein the processor is configured to determine the limited autonomous driving type to be the type of the minimal risk maneuver when all the functions needed for the autonomous driving are possible to operate normally and the minimum risk maneuver is needed.

9. The autonomous driving vehicle of claim 1,
wherein the processor is configured to limit at least one among a maximum speed of the vehicle and a maximum output power of the vehicle during the limited autonomous driving.

10. The autonomous driving vehicle of claim 1,
wherein the processor is configured to limit a range of lane change and allows lane change only in a direction away from a center line during the limited autonomous driving.

11. The autonomous driving vehicle of claim 1,
wherein the processor is configured to:
search a safe area, set the safe area as a destination, and move into the set destination through the limited autonomous driving when the limited autonomous driving type is determined, and
wherein the limited autonomous driving has a limited condition on at least one among a maximum speed, a maximum output power, lane change, a traveling allowable time, and a traveling allowable distance.

12. The autonomous driving vehicle of claim 11,
wherein the at least one sensor comprises at least one camera generating the surrounding environment information, and
wherein the processor is configured to search the safe area based on information obtained from the at least one camera.

13. The autonomous driving vehicle of claim 12,
wherein the processor is configured to compare an image obtained from the at least one camera and a prestored image of a safe area and determines the safe area.

14. A method for operating an autonomous driving vehicle, comprising:
obtaining surrounding environment information by sensing surrounding environment of the vehicle during autonomous driving of the vehicle ;
obtaining vehicle state information monitoring state of the vehicle during the autonomous driving of the vehicle;
sensing whether a minimal risk maneuver is needed based on at least one among the surrounding environment information and the vehicle state information during the autonomous driving of the vehicle;
determining a type of the minimal risk maneuver based on the vehicle state information when the minimal risk maneuver is needed; and
stopping the vehicle based on the determined type of the minimal risk maneuver,
wherein the type of the minimal risk maneuver comprises at least one among an immediate deceleration type and a limited autonomous driving type.

15. The method for operating an autonomous driving vehicle of claim 14,
wherein the vehicle state information represents whether functions needed for the autonomous driving are possible to operate normally, and
wherein the functions needed for autonomous driving include at least one among a lane detection function, a lane change function, a lateral control function, a deceleration function, a powertrain control function, a safe area detection function, and an obstacle recognition and distance detection function.

16. The method for operating an autonomous driving vehicle of claim 15,
wherein the determining a type of the minimal risk maneuver based on the vehicle state information compriese:
determining whether at least one function among the functions needed for the autonomous driving is impossible to operate normally based on the vehicle state information; and
determining the immediate deceleration type to be the type of the minimum risk maneuver when at least one function among the functions needed for the autonomous driving is impossible to operate normally.

17. The method for operating an autonomous driving vehicle of claim 16,
wherein the immediate deceleration type comprises at least one among
an emergency stop type of stopping the vehicle at a specified first deceleration;
a gradual stop type of selecting one among a second deceleration and a third deceleration based on at least one among presence of an obstacle and a distance to the obstacle and stopping the vehicle at the selected deceleration; and
a gradual stop within lane type of selecting at least one among a second deceleration and a third deceleration based on at least one among presence of an obstacle and a distance to the obstacle and maintaining to be in a lane while stopping the vehicle at the selected deceleration,
wherein the second deceleration is smaller than the first deceleration, and
wherein the third deceleration is greater than the second deceleration and smaller than or equal to the first deceleration.

18. The method for operating an autonomous driving vehicle of claim 16, further comprising:
determining the limited autonomous driving type to be the type of the minimal risk maneuver when all the functions needed for the autonomous driving are possible to operate normally and the minimum risk maneuver is needed.

19. The method for operating an autonomous driving vehicle of claim 14,
wherein the stopping the vehicle based on the determined type of the minimal risk maneuver comprises limiting at least one among a maximum speed of the vehicle, a maximum output power of the vehicle, a direction of lane change, a traveling allowable time, and a traveling allowable distance during the limited autonomous driving when the limited autonomous driving type is determined to be the type of the minimal risk maneuver.

20. The method for operating an autonomous driving vehicle of claim 19,
wherein the stopping the vehicle based on the determined type of the minimal risk maneuver further comprises:
searching a safe area and setting the safe area as a destination; and
moving into the set destination through the limited autonomous driving.
